# EUROPEAN PATENT SPECIFICATION

(11) **EP 3 839 996 B1**
(45) Date of publication and mention of the grant of the patent: **31.01.2024**
(21) Application number: 20214626.2
(22) Date of filing: 16.12.2020
(51) Int. Cl.: H01H 9/06

(54) **ELECTRIC GROUND DRILL**
ELEKTRISCHER ERDLOCHBOHRER
TARIÈRE ÉLECTRIQUE

(30) Priority: 19.12.2019 CN 201911317292
(43) Date of publication of application: 23.06.2021
(73) Proprietor: Globe (Jiangsu) Co., Ltd., Zhonglou District Changzhou, Jiangsu 213023 (CN)
(72) Inventor: HUANG, Fei, Changzhou, Jiangsu 213023 (CN)
(74) Representative: Bergenstråhle & Partners AB

(56) References cited:
- EP-A1- 2 732 925
- EP-A2- 2 233 251
- EP-B1- 2 233 251
- EP-B1- 2 732 925
- US-A- 4 198 721
- US-A- 4 879 438
- US-A- 5 953 781

## Description

### Technical field

The present invention relates to a power tool, and particularly to an electric ground drill.

### Background art

Ground drills are widely used in seedling landscaping projects on sandy and hard soil for digging holes. The conventional drills use a two-stroke or four-stroke gasoline engine as the power source, which is easy to access and makes the drill work long hours. However, the vibration and noise of gasoline engine usually makes the operators unbearable, and professional workers are more likely to get occupational diseases after long-term use. Moreover, two-stroke or four-stroke gasoline engines have low energy efficiency, and burning fuels will inevitably generate pollutants. In general, the use of gasoline engines is unfriendly to humans and the environment.

Considering the mobility and the working efficiency, DC electric ground drill with electric motor powered by batteries becomes more popular in the market. Unlike the gasoline engine ground drill with operation by pulling the engine control member, the DC electric ground drill can be activated or deactivated by pressing the switch button, which makes the operation more convenient. However, the normal switch button structure may bring the safety issue of inadvertent actuation of the drill.

US patent no. 5,953,781 discloses a handle assembly for a floor maintenance machine and includes a hollow handle pole, a handle formed of a foamed polymer, and a device for adjustably locking the handle pole relative to the housing of the floor maintenance machine. Pivotable triggers are pivotally mounted to cylindrical pivot bosses formed in the handle, with unintentional pivoting of the triggers being prevented by a slideably mounted, lock-out device.

In view of the above, there is a need to provide an improved electric ground drill to solve the problems.

### Summary of invention

The objective of the present invention is to provide an electric ground drill which is provided with a self-locking button so that the electric ground drill can be started only when the switch and the self-locking button are triggered at the same time, thereby improving the safety performance of the electric ground drill.

In order to achieve the object, the present invention provides an electric ground drill with the features of claim 1.

As a further improvement of the invention, an abutting arm is arranged on a side of the self-locking button facing the switch, and a receiving groove is arranged on a side of the switch facing the self-locking button; wherein when the self-locking button is in the first state, the abutting arm and the receiving groove are misaligned, and the abutting arm abuts against the switch; and wherein when the self-locking button is in the second state, the abutting arm and the receiving groove are in alignment.

As a further improvement of the invention, the switch assembly comprises a switch reset elastic element for resetting the switch, and wherein one end of the switch reset elastic element abuts against the handle and the other end thereof abuts against the switch.

As a further improvement of the invention, the switch assembly comprises a self-locking button reset elastic element for resetting the self-locking button, and wherein one end of the self-locking button reset elastic element abuts against the self-locking button, and the other end thereof abuts against the handle.

As a further improvement of the invention, the switch assembly further comprises a self-locking button reset elastic element for resetting the self-locking button under the action of the self-locking button reset elastic element.

As a further improvement of the invention, the electric ground drill further comprises a reversing assembly, wherein the reversing assembly comprises a second micro switch and a reversing button cooperating with the second micro switch; and wherein the second micro switch is configured as: the motor assembly reverses only when the first micro switch and the second micro switch are both triggered simultaneously.

As a further improvement of the invention, the handle comprises a first handle and a second handle disposed opposite to each other; and wherein the switch assembly is arranged on the first handle and the reversing assembly is arranged on the second handle.

As a further improvement of the invention, the second handle comprises a groove for accommodating the reversing button; and wherein the reversing button partially protrudes from the groove in a direction facing the motor assembly.

As a further improvement of the invention, the bracket includes a mounting portion for mounting the motor assembly, an operating portion located at the periphery of the mounting portion, and a connecting portion connecting the mounting portion and the operating portion.

As a further improvement of the invention, at least one illumination lamp is positioned on a side of the operation portion facing the drill rod.

As a further improvement of the invention, the operation portion is rectangular, and wherein the at least one illumination lamp is located at a corner of the operation portion.

As a further improvement of the invention, the electric ground drill further comprises an illumination lamp, wherein the illumination lamp is turned on when the first micro switch is triggered.

As a further improvement of the invention, the electric ground drill further comprises a transmission mechanism, wherein the transmission mechanism engages with the drill rod and the motor assembly, wherein the transmission mechanism comprises a gear assembly and a gear box for accommodating the gear assembly; wherein the gear box includes a first rotation stopper, and wherein the bracket comprises a second rotation stopper that cooperates with the first rotation stopper to transmit the force received by the gear box to the bracket.

As a further improvement of the invention, the gear box comprises a box body and a cover matched with the box body, and wherein the box body and the box cover are respectively located on opposite sides of the bracket.

As a further improvement of the invention, the first rotation stopper comprises a first positioning member disposed on an end of the box body close to the bracket; and the second rotation stopper comprises a second positioning member arranged on a side of the bracket facing the box body; and wherein the second positioning member engages with the first positioning member.

As a further improvement of the invention, the first rotation stopper comprises a first fixing member disposed on a side of the box cover facing the bracket; and the second rotation stopper comprises a second fixing member arranged on a side of the bracket facing the box cover; and wherein the second fixing member engages with the first fixing member.

The beneficial effect of the present invention is that: the electric ground drill of the present invention is provided with a self-locking button so that the electric ground drill can be started only when the switch and the self-locking button are triggered at the same time, thereby improving the safety performance of the electric ground drill.

The above general description and the following detailed description are intended to be illustrative and not restrictive.

### Brief description of drawings

FIG. 1 is a perspective view of an electric ground drill of the present invention.
FIG. 2 is a schematic view showing the engagement between a bracket, a motor assembly and a transmission mechanism.
FIG. 3 is an exploded, perspective view of the transmission mechanism.
FIG. 4 is an exploded, perspective view of the transmission mechanism taken from another aspect.
FIG. 5 is an exploded, perspective view of a primary gear assembly.
FIG. 6 is a perspective view of a secondary gear assembly.
FIG. 7 is a partial enlarged, exploded perspective view of a box cover and the bracket.
FIG. 8 is a perspective view of the bracket.
FIG. 9 is a perspective view of the bracket taken from another aspect.
FIG. 10 is a schematic view showing the engagement between the bracket, the transmission mechanism and a shell without top wall.
FIG. 11 is a structural schematic view of a switching assembly.
FIG. 12 is a schematic view showing an engagement between a switch and a self-locking button.
FIG. 13 is a structural schematic view of a reverse assembly.

### Description of embodiment

The exemplary embodiment will be described in detail herein, and the embodiment is illustrated in the accompanying drawings. When the following description refers to the drawings, unless otherwise indicated, the same numbers in different drawings indicate the same or similar elements. The embodiment described in the following exemplary embodiment does not represent all embodiments consistent with present invention. On the contrary, they are only examples of devices, systems, machines, and methods consistent with some aspects of the invention as detailed in the appended claims.

Reference will now be made to the drawing figures to describe the embodiments of the present disclosure in detail. In the following description, the same drawing reference numerals are used for the same elements in different drawings.

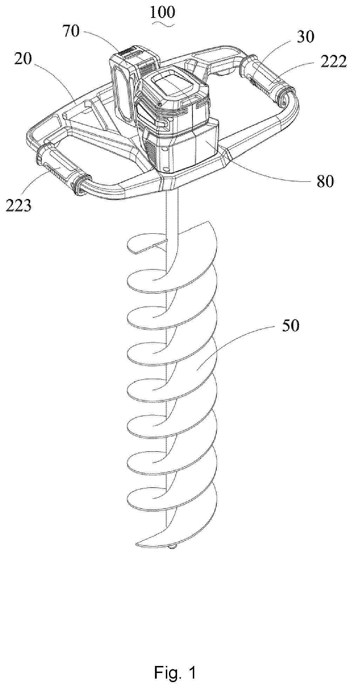

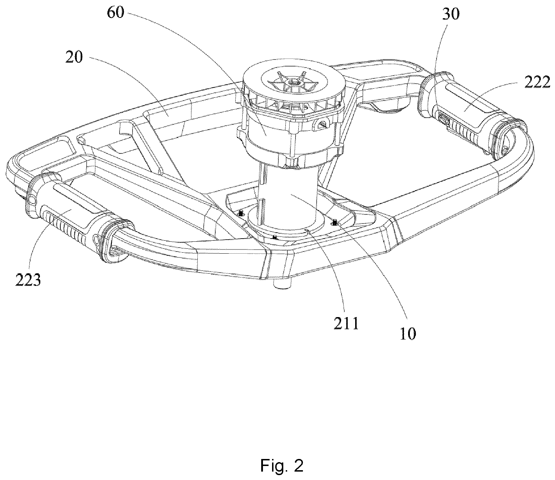

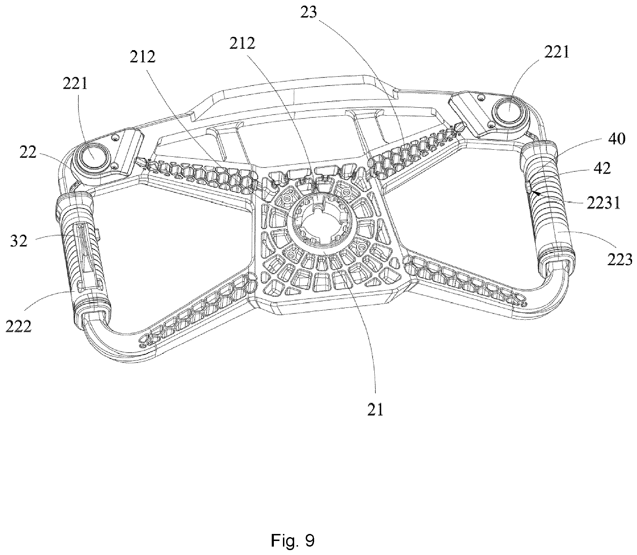

Referring to FIG. 1 and FIG. 2, the present invention discloses an electric ground drill 100, including a drill rod 50, a motor assembly 60, a battery pack 70 that provides power to the motor assembly 60, a transmission mechanism 10, a bracket 20, a switch assembly 30, and a reversing assembly 40 (as shown in FIG. 9). The drill rod 50 is an operating mechanism for performing the functions of the electric ground drill 100. The motor assembly 60 drives the drill rod 50 to rotate through the transmission mechanism 10.

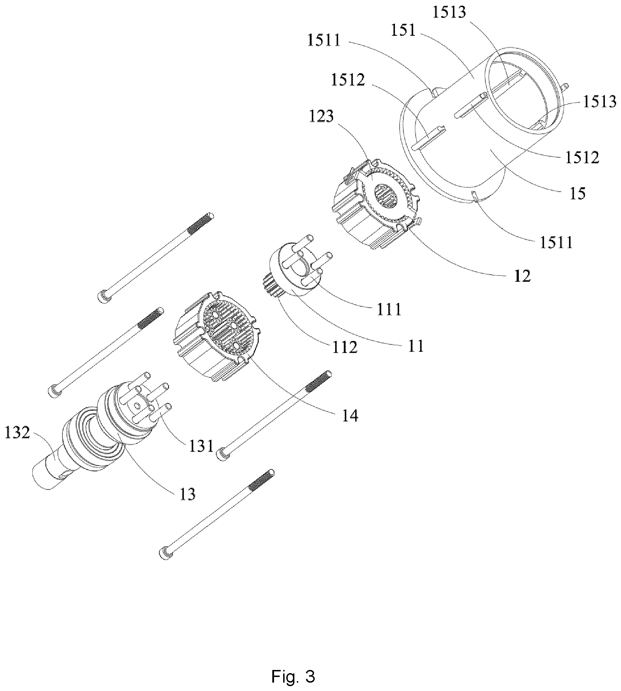

Referring to FIG. 3, FIG. 4 and FIG. 2, the transmission mechanism 10 cooperates with the drill rod 50 and the motor assembly 60 so as to transmit the power output by the motor assembly 60 to the drill rod 50. The transmission mechanism 10 includes a gear assembly and a gear box 15 accommodating the gear assembly. The gear assembly includes a primary planet carrier 11, a primary gear assembly 12, a secondary planet carrier 13 and a secondary gear assembly 14. One end of the primary planet carrier 11 comprises a plurality of primary planetary shafts 111 engaged with the primary gear assembly 12, and the other end comprises a sun gear 112 engaged with the secondary gear assembly 14.

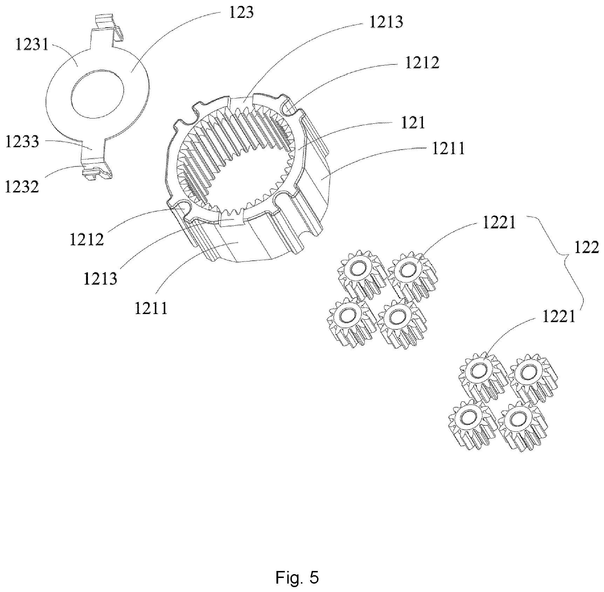

Referring to FIG. 5, the primary gear assembly 12 includes a primary ring gear 121, a primary gear set 122 located in the primary ring gear 121, and a fixing plate 123. A side wall of the primary gear 121 facing away from the primary gear set 122 comprises flat walls 1211 and a fixing portion 1212 located between the adjacent flat walls 1211. The fixing portion 1212 extends throughout the thickness of the primary ring gear 121 along the axial direction of the primary ring gear 121. The fixing portion 1212 comprises a slot on a side facing a side wall of the gear box 15, and the fixing portion 1212 is configured as a semi-circular portion. An end of the primary ring gear 121 away from the secondary gear assembly 14 comprises a retaining groove 1213. The primary gear set 122 includes at least two groups of primary planetary gear set 1221. The at least two primary planetary gear sets 1221 are overlapped in the axial direction of the primary ring gear 121, and are pivotably mounted on the primary planetary gear shaft 111, and the outer side of the primary planetary gear set 1221 engages with the primary ring gear 121 and the inner side thereof engages with a central gear (not shown) arranged on the output shaft of the motor assembly 60. Each group of the primary planetary gear set 1221 includes four planetary gears, and the four planetary gears are evenly distributed on the peripheral edge of the primary ring gear 121 along the axial direction. In this embodiment, the number of the primary planetary gear set 1221 is two, and each set of the primary planetary gear set 1221 includes four gears, but in other embodiments, the number of the primary planetary gear set 1221 (≥ 2) and the number of gears contained in each group of the primary planetary gear set 1221 can be arranged as required. Since the primary gear set 122 comprises at least two primary planetary gear sets 1221, the load carried by the primary gear set 122 is relatively uniform, so that the primary planet carrier 11 can withstand a larger load, and can output a stable force. Moreover, the service life of the transmission mechanism 10 can be extended due to the uniform load carried by the primary gear set 122. The fixing plate 123 is located at an end of the primary gear assembly 12 away from the secondary gear assembly 14 to limit the primary planetary gear set 1221 within the primary ring gear 121. The fixing plate 123 includes a main body 1231, an elastic resisting portion 1232 extending from the main body 1231, and a connecting portion 1233 connecting the main body 1231 and the elastic resisting portion 1232. The main body 1231 has an annular shape. The connecting portion 1233 is accommodated in the retaining groove 1213, and the elastic resisting portion 1232 is bend and substantially V-shaped. One end of the elastic resisting portion 1232 facing away from the connecting portion 1233 elastically resists the side wall of the gear box 15, so as to secure the fixing plate 123 in the primary gear assembly 12.

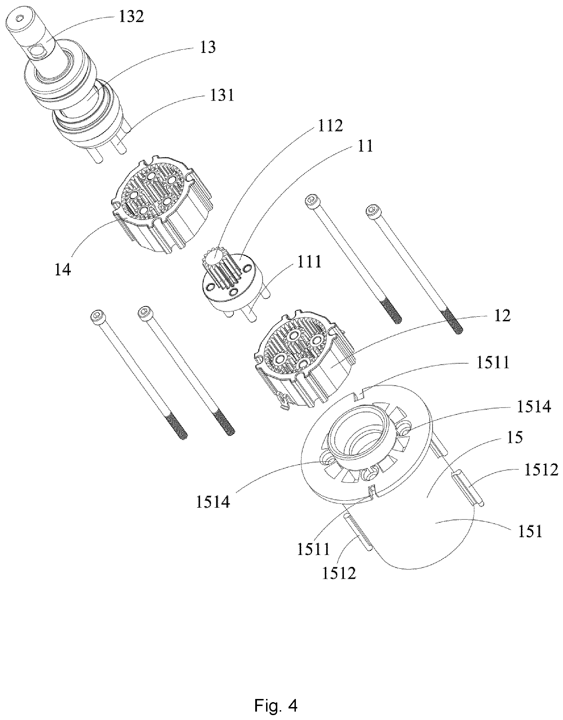

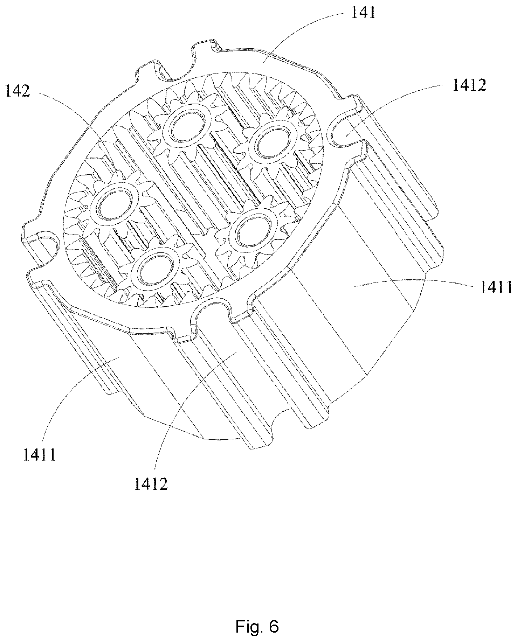

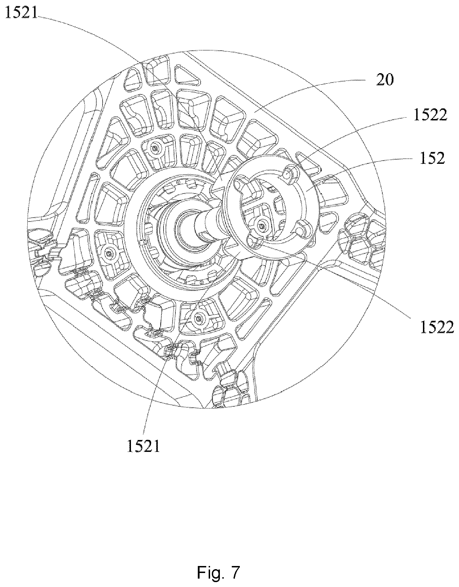

Referring to FIG. 3 and 4, one end of the secondary planetary carrier 13 is provided with a plurality of secondary planetary gear shafts 131 engaged with the secondary gear assembly 14, and the other end is provided with an output shaft 132 engaged with the drill rod 50. Referring to FIG. 6, the secondary gear assembly 14 includes a secondary gear ring 141 and a secondary planetary gear set 142 located in the secondary gear ring 141. A side wall of the secondary ring gear 141 facing away from the secondary planetary gear set 142 comprises a flat wall 1411 and a fixing portion 1412 located between the adjacent flat walls 1411. The fixing portion 1412 extends throughout the thickness of the secondary gear 141 along the axial direction of the secondary gear 141. The fixing portion 1412 comprises a slot on a side facing the side wall of the gear box 15, and the fixing portion 1412 is a configured as a semi-circular slot. The secondary planet gear set 142 is pivotably arranged on the secondary planet gear shaft 131, and the outer side of the secondary planet gear set 142 engages with the secondary ring gear 141 and the inner side thereof engages with the sun gear 112. In this embodiment, the secondary planet gear set 142 includes five gears, but in other embodiments, the number of the gears of the secondary planet gear set 142 can be configurable according to the requirements without limitation. Referring together to FIGs. 3, 4 and 7, the gear box 15 accommodates the primary planet carrier 11, the primary gear assembly 12, the secondary planet carrier 13 and the secondary gear assembly 14, and includes a box body 151 and a box cover 152 matched with the box body 151. The box body 151 and the box cover 152 are respectively located on opposite sides of the bracket 20. The gear box 15 includes a first rotation stopper comprising a first positioning member 1511 disposed on an end of the box body 151 close to the bracket 20 and a first fixing member 1521 disposed on a side of the box cover 152 facing the bracket 20. The box body 151 includes a first resist member 1512 on a sidewall thereof facing away from the gear assembly. A side wall of the box body 151 facing the gear assembly also includes positioning ribs 1513 being in cooperating with the flat wall 1211 and the flat wall 1411. Since the contact surfaces of the flat walls 1211, 1411 and the positioning rib 1513 are flat, the contact area between the box body 151 and the primary gear ring 121 and the secondary gear ring 141 can be effectively increased, and this also makes it easy to assemble the gear box 15, the primary gear ring 121, and the secondary gear ring 141. In the present embodiment, the number of the positioning rib 1513 is four, and they are evenly arranged on the side wall of the box body 151. The numbers of the flat walls 1211, 1411 are both four, and they are evenly arranged on side walls of the primary gear ring 121, the secondary gear ring 141, respectively. In other embodiments, the numbers of the positioning rib 1513, the flat walls 1211, 1411 can be determined according to the requirements without limitation. The box body 151 also includes a box assembling hole 1514 engaging with the fixing portion 1212 and the fixing portion 1412. The box cover 152 has a cover assembling hole 1522. The cover assembling hole 1522, the box assembling hole 1514, the fixing portion 1212 and the fixing portion 1412 engage with each other through a screw, thereby fixing the box body 151, the gear assembly, the box cover 152 together.

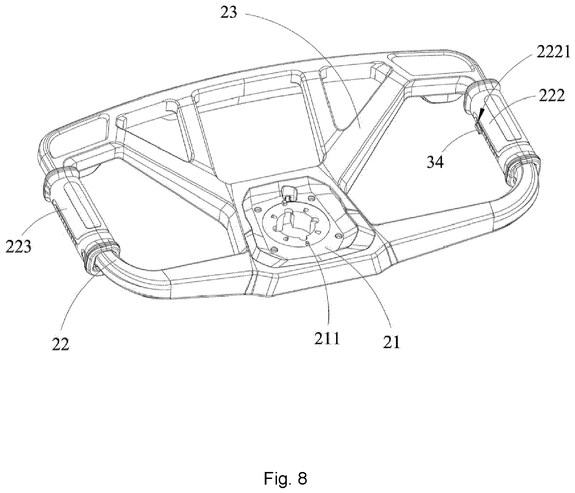

Referring to FIGs. 8, 9 and FIG. 7, the bracket 20 includes a mounting portion 21, an operating portion 22 located at the periphery of the mounting portion 21, and a connecting portion 23 connecting the mounting portion 21 and the operating portion 22. The motor assembly 60 and the transmission mechanism 10 are mounted on the mounting portion 21. The mounting portion 21 includes a second rotation stopper that cooperates with the first rotation stopper to transmit the force received by the gear box 15 to the bracket 20. The second rotation stopper includes a second positioning member 211 arranged on a side of the mounting portion 21 facing the box body 151, and a second fixing member 212 arranged on the side of the mounting portion 21 facing the box cover 152. The second positioning member 211 engages with the first positioning member 1511, and the second fixing member 212 engages with the first fixing member 1521, so that the force received by the gear box 15 can be transmitted to the bracket 20 through the first positioning member 1511, the second positioning member 211, the first fixing member 1521, and the second fixing member 212, thereby effectively preventing connection between the gear box 15 and the bracket 20 from loosening. In the present embodiment, the first positioning member 1511 is a positioning recess, and the second positioning member 211 is a positioning protrusion, while in other embodiments, the first positioning member 1511 may also be a positioning protrusion, and the second positioning member 211 can also be a positioning recess matching with the positioning protrusion. In the present embodiment, the first fixing member 1521 is a protrusion extending downwards from the box cover 152, and the second fixing member 212 is a recess matching with the protrusion. The cover assembling hole 1522 is located on the first fixing member 1521.

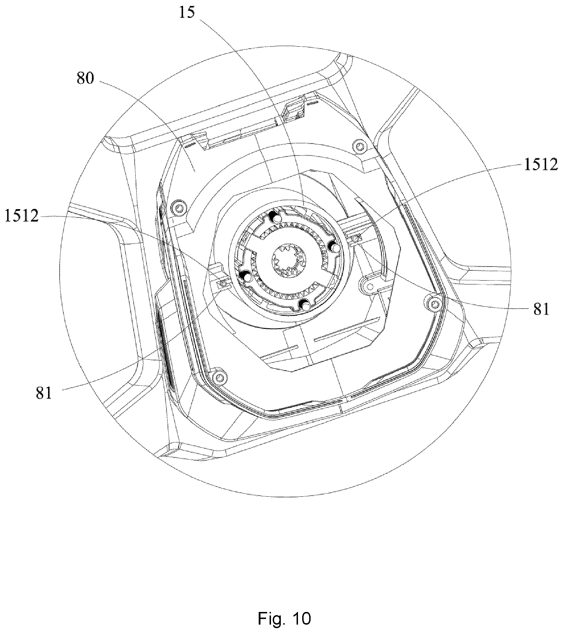

Referring to FIG. 10 and FIG. 1, the electric ground drill 100 also includes a shell 80 securely assembled on the bracket 20. The motor assembly 60 and the transmission mechanism 10 are received in the shell 80. A inner side wall of the shell 80 has a second resist member 81 matched with the first resist member 1512. This arrangement makes that the force applied to the gear box 15 can be transmitted to the shell 80 through the first resist member 1512 and the second resist member 81, and indirectly transmitted to the bracket 20, thereby a loosening phenomenon between the gear box 15 and the bracket 20 can be effectively prevented, thus the user experience is effectively improved. In the present embodiment, the first resist member 1512 is a protrusion, and the second resist member 81 is a recess engaging with the protrusion, while in other embodiments, the first resist member 1512 may also be a recess and the second resist member 81 may be a protrusion. The operating portion 22 is substantially rectangular, and an illumination lamp 221 is positioned on a side of the operating portion 22 facing the drill rod 50. In this embodiment, the number of the illumination lamps 221 is two, and they are located at one end of the operating portion 22 close to the battery pack 70. Preferably, the number of the illumination lamps 221 is four, and they are located at four corners of the operating portion 22 respectively. By such an arrangement, a wide range of illumination area can be obtained, and the light emitted by the illumination lamp towards the working area can not be blocked by the drill rod 50, thereby effectively improving the user experience. The operating portion 22 is also provided with a pair of handles, including a first handle 222 and a second handle 223 disposed opposite to each other.

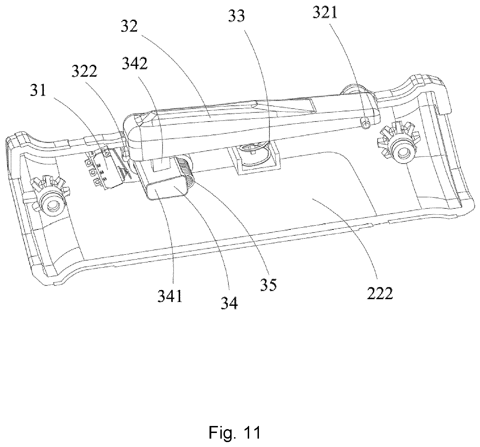

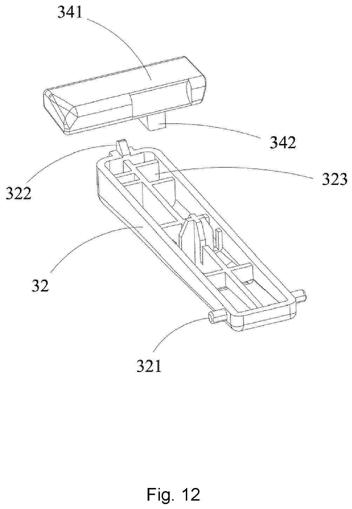

Referring to FIG. 11, FIG. 12 and FIG. 1, the switch assembly 30 is assembled on the first handle 222, and includes a first micro switch 31, a switch 32, a switch reset elastic element 33, a self-locking button 34, and a self-locking button reset elastic element 35. The first micro switch 31 is configured to activate or deactivate the motor assembly 60. The switch 32 is pivotably mounted on the handle 222 through a pivot 321, and an end of the switch 32 facing away from the pivot 321 is provided with an abutting block 322 that cooperates with the first micro switch 31. A receiving groove 323 is arranged on a side of the switch 32 facing the self-locking button 34. One end of the switch reset elastic element 33 abuts against the first handle 222 and the other end abuts against the switch 32. The self-locking button 34 includes a base 341 and an abutting arm 342 located on a side of the base 341 facing the switch 32, and the abutting arm 342 is cooperating with the receiving groove 323. One end of the self-locking button reset elastic element 35 abuts against the self-locking button 34, and the other end abuts against the first handle 222. Referring to FIG. 8, a through hole 2221 is arranged on a side of the first handle 222 facing the motor assembly 60, and the self-locking button 34 partially protrudes from the through hole 2221 so as to be pressed by the operator.

The button 34 is configured in such a way that: when the self-locking button 34 is in the first state, the self-locking button 34 abuts against the switch 32 to prevent the switch 32 from rotating around the pivot 321; when the self-locking button 34 is in the second state, the self-locking button 34 is out of contact with the switch 32, and the switch 32 can rotate around the pivot 321. Specifically, when the self-locking button 34 is pressed (i.e., in the second state), the self-locking button reset elastic element 35 is elastically deformed, and the self-locking button 34 moves into the first handle 222 so that the abutting arm 342 and the receiving groove 323 are in alignment. At this time, pressing the switch 32 causes the switch 32 to rotate around the pivot 321. The switch reset elastic element 33 is elastically deformed, and the abutting arm 342 enters into the receiving groove 323, and the abutting block 322 abuts against the first micro switch 31, so that the first micro switch 31 is activated. When the switch 32 is released, the switch 32 is reset under the action of the switch reset elastic element 33; when the self-locking button 34 is released, the self-locking button 34 is reset under the action of the elastic element 35 (i.e., in the first state). At this time, the abutting arm 342 and the receiving groove 323 are misaligned, and the abutting arm 342 abuts against the switch 32, so that the switch 32 cannot rotate around the pivot 321. Therefore, the electric ground drill 100 of the present invention will not be activated by accidentally touching the switch 32, and a safety operation of the electric ground drill 100 is achieved. In the present embodiment, the moving direction of the self-locking button 34 from the first state to the second state is parallel to the axial direction of the pivot 321, while in other embodiments, the moving direction from the first state to the second state of the self-locking button 34 may also be configured to be perpendicular to the axial direction of the pivot 321.

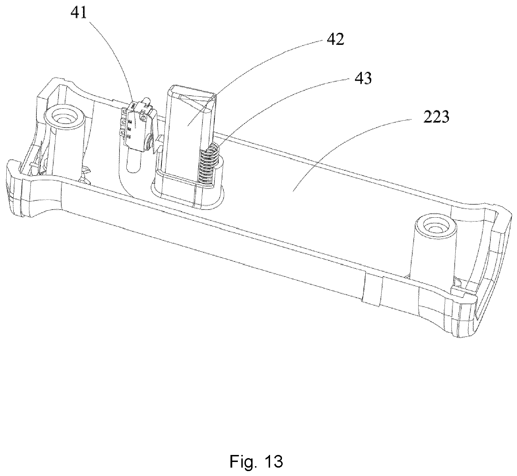

Referring to FIG. 13 and FIG. 9, the reversing assembly 40 is disposed on the second handle 223, and includes a second micro switch 41, a reversing button 42 engaged with the second micro switch 41, and a reversing button reset elastic element 43. The second handle 223 is provided with a groove 2231 for accommodating the reversing button 42. The reversing button 42 partially protrudes from the groove 2231, and the protruding portion thereof is located on a side of the second handle 223 facing the motor assembly 60. When the reversing button 42 is pressed, the reversing button 42 retracts into the groove 2231, the reversing button reset elastic element 43 is elastically deformed, and the reversing button 42 abuts against the second micro switch 41 so that the second micro switch 41 is triggered. When the reversing button 42 is released, the reversing button 42 is reset under the action of the reversing button reset elastic element 43. In this embodiment, the second micro switch 41 is configured in such a way that: the motor assembly 60 reverses when and only when the first micro switch 31 and the second micro switch 41 are both triggered at the same time. With this arrangement, it is possible to prevent the electric ground drill 100 from reversing due to accidentally touching the reversing button 42, thereby effectively improving the safety factor. In this embodiment, after any one of the first micro switch 31 and the second micro switch 41 is triggered, the illumination lamp 221 is turned on.

Compared with the prior art, the electric ground drill 100 of the present invention comprising the self-locking button 34 enables the electric ground drill 100 to be activated only when the switch 32 and the self-locking button 34 are triggered simultaneously, thereby improving the safety factor of the electric ground drill 100.

## Claims

1. An electric ground drill (100) comprising a bracket (20) having a handle (222, 223), a drill rod (50), a motor assembly (60) mounted on the bracket (20) for driving the drill rod (50) to rotate, and a switch assembly (30) mounted on the handle (222), wherein the switch assembly (30) comprises:
a first micro switch (31) configured to activate or deactivate the motor assembly (60);
a switch (32) pivotably mounted on the handle (222) through a pivot (321), and cooperating with the first micro switch (31); and
a self-locking button (34) engaged with the switch and configured as: when in a first state, the self-locking button (34) abuts against the switch (32) to prevent the switch (32) from rotating around the pivot (321); when in a second state, the self-locking button (34) is disengaged with the switch (32), and the switch (32) can rotate around the pivot (321), wherein a moving direction of the self-locking button (34) from the first state to the second state is parallel to or perpendicular to an axial direction of the pivot (321), **characterized in that** a through hole (2221) is arranged on a side of the handle (222) facing the motor assembly (60), and wherein the self-locking button (34) is partially protruded from the through hole (2221).

2. The electric ground drill (100) according to claim 1, wherein an abutting arm (342) is arranged on a side of the self-locking button (34) facing the switch (32), and a receiving groove (323) is arranged on a side of the switch (32) facing the self-locking button (34); wherein when the self-locking button (34) is in the first state, the abutting arm (342) and the receiving groove (323) are misaligned, and the abutting arm (342) abuts against the switch (32); and wherein when the self-locking button (34) is in the second state, the abutting arm (342) and the receiving groove (323) are in alignment.

3. The electric ground drill (100) according to claim 1, wherein the switch assembly (30) comprises a switch reset elastic element (33) for resetting the switch (32), and wherein one end of the switch reset elastic element (33) abuts against the handle (222) and the other end thereof abuts against the switch (32).

4. The electric ground drill (100) according to claim 1, wherein the switch assembly (30) comprises a self-locking button reset elastic element (35) for resetting the self-locking button (34), and wherein one end of the self-locking button reset elastic element (35) abuts against the self-locking button (34), and the other end thereof abuts against the handle (222).

5. The electric ground drill (100) according to claim 1, further comprising a reversing assembly (40), wherein the reversing assembly (40) comprises a second micro switch (41) and a reversing button (42) cooperating with each other; and wherein the second micro switch (41) is configured as: the motor assembly (60) reverses only when the first micro switch (31) and the second micro switch (41) are both triggered simultaneously.

6. The electric ground drill (100) according to claim 5, wherein the handle (222, 223) comprises a first handle (222) and a second handle (223) disposed opposite to each other; and wherein the switch assembly (30) is arranged on the first handle (222) and the reversing assembly (40) is arranged on the second handle (223).

7. The electric ground drill (100) according to claim 6, wherein the second handle (223) comprises a groove (2231) for accommodating the reversing button (42); and wherein the reversing button (42) partially protrudes from the groove (2231) in a direction facing the motor assembly (60).

8. The electric ground drill (100) according to claim 1, wherein the bracket (20) includes a mounting portion (21) for mounting the motor assembly (60), an operating portion (22) located at the periphery of the mounting portion (21), and a connecting portion connecting the mounting portion (21) and the operating portion (22).

9. The electric ground drill (100) according to claim 8, wherein at least one illumination lamp (221) is positioned on a side of the operating portion (22) facing the drill rod (50).

10. The electric ground drill (100) according to claim 9, wherein the operating portion (22) is rectangular, and wherein the at least one illumination lamp (221) is located at a corner of the operating portion (22).

11. The electric ground drill (100) according to claim 1, further comprising an illumination lamp (221), wherein the illumination lamp (221) is turned on when the first micro switch (31) is triggered.

12. The electric ground drill (100) according to claim 1, further comprising a transmission mechanism (10), wherein the transmission mechanism (10) engages with the drill rod (50) and the motor assembly (60), wherein the transmission mechanism (10) comprises a gear assembly and a gear box (15) for accommodating the gear assembly; wherein the gear box (15) includes a first rotation stopper, and wherein the bracket (20) comprises a second rotation stopper that cooperates with the first rotation stopper to transmit the force received by the gear box (15) to the bracket (20).

13. The electric ground drill (100) according to claim 12, wherein the gear box (15) comprises a box body (151) and a box cover (152) matched with the box body (151), and wherein the box body (151) and the box cover (152) are respectively located on opposite sides of the bracket (20).

14. The electric ground drill (100) according to claim 13, wherein the first rotation stopper comprises a first positioning member (1511) disposed on an end of the box body (151) close to the bracket (20); and the second rotation stopper comprises a second positioning member (211) arranged on a side of the bracket (20) facing the box body (151); and wherein the second positioning member (211) engages with the first positioning member (1511).

15. The electric ground drill (100) according to claim 13, wherein the first rotation stopper comprises a first fixing member (1521) disposed on a side of the box cover (152) facing the bracket (20); and the second rotation stopper comprises a second fixing member (212) arranged on a side of the bracket (20) facing the box cover (152); and wherein the second fixing member (212) engages with the first fixing member (1521).

## Patentansprüche

1. Elektrischer Erdbohrer (100), umfassend eine Halterung (20) mit einem Griff (222, 223), eine Bohrstange (50), eine an der Halterung (20) montierte Motorbaugruppe (60) zum Antreiben der Bohrstange (50) so, dass sie sich dreht, und eine Schalterbaugruppe (30), die am Griff (222) montiert ist, wobei die Schalterbaugruppe (30) umfasst:
einen ersten Mikroschalter (31), der zum Aktivieren oder Deaktivieren der Motorbaugruppe (60) konfiguriert ist;
einen Schalter (32), der über einen Drehzapfen (321) schwenkbar am Griff (222) montiert ist und mit dem ersten Mikroschalter (31) zusammenwirkt; und
einen selbstsperrenden Knopf (34), der mit dem Schalter in Eingriff steht und wie folgt konfiguriert ist: wenn sich der selbstsperrende Knopf (34) in einem ersten Zustand befindet, liegt er am Schalter (32) an, um zu verhindern, dass sich der Schalter (32) um den Drehzapfen (321) dreht; wenn sich der selbstsperrende Knopf (34) in einem zweiten Zustand befindet, steht er mit dem Schalter (32) außer Eingriff und der Schalter (32) kann sich um den Drehzapfen (321) drehen, wobei eine Bewegungsrichtung des selbstsperrenden Knopfs (34) vom ersten Zustand zum zweiten Zustand parallel oder senkrecht zu einer Axialrichtung des Drehzapfens (321) verläuft, **dadurch gekennzeichnet, dass** ein Durchgangsloch (2221) auf einer der Motorbaugruppe (60) zugewandten Seite des Griffs (222) eingerichtet ist, und wobei der selbstsperrende Knopf (34) teilweise aus dem Durchgangsloch (2221) hervorsteht.

2. Elektrischer Erdbohrer (100) nach Anspruch 1, wobei ein Anlagearm (342) auf einer dem Schalter (32) zugewandten Seite des selbstsperrenden Knopfs (34) eingerichtet ist und eine Aufnahmenut (323) auf einer dem selbstsperrenden Knopf (34) zugewandten Seite des Schalters (32) eingerichtet ist; wobei, wenn sich der selbstsperrende Knopf (34) im ersten Zustand befindet, der Anlagearm (342) und die Aufnahmenut (323) nicht ausgerichtet sind und der Anlagearm (342) am Schalter (32) anliegt; und wobei, wenn sich der selbstsperrende Knopf (34) im zweiten Zustand befindet, der Anlagearm (342) und die Aufnahmenut (323) ausgerichtet sind.

3. Elektrischer Erdbohrer (100) nach Anspruch 1, wobei die Schalterbaugruppe (30) ein elastisches Schalterrückstellelement (33) zum Zurückstellen des Schalters (32) umfasst und wobei ein Ende des elastischen Schalterrückstellelements (33) am Griff (222) anliegt und das andere Ende davon am Schalter (32) anliegt.

4. Elektrischer Erdbohrer (100) nach Anspruch 1, wobei die Schalterbaugruppe (30) ein elastisches Element (35) zum Zurückstellen des selbstsperrenden Knopfs zum Zurückstellen des selbstsperrenden Knopfs (34) umfasst, und wobei ein Ende des elastischen Elements (35) zum Zurückstellen des selbstsperrenden Knopfs am selbstsperrenden Knopf (34) anliegt und das andere Ende davon am Griff (222) anliegt.

5. Elektrischer Erdbohrer (100) nach Anspruch 1, der weiter eine Umkehrbaugruppe (40) umfasst, wobei die Umkehrbaugruppe (40) einen zweiten Mikroschalter (41) und einen Umkehrknopf (42) umfasst, die miteinander zusammenwirken; und wobei der zweite Mikroschalter (41) wie folgt konfiguriert ist: die Motorbaugruppe (60) kehrt nur um, wenn der erste Mikroschalter (31) und der zweite Mikroschalter (41) beide gleichzeitig ausgelöst werden.

6. Elektrischer Erdbohrer (100) nach Anspruch 5, wobei der Griff (222, 223) einen ersten Griff (222) und einen zweiten Griff (223) umfasst, die einander gegenüberliegend angeordnet sind; und wobei die Schalterbaugruppe (30) am ersten Griff (222) eingerichtet ist und die Umkehrbaugruppe (40) am zweiten Griff (223) eingerichtet ist.

7. Elektrischer Erdbohrer (100) nach Anspruch 6, wobei der zweite Griff (223) eine Nut (2231) zum Aufnehmen des Umkehrknopfs (42) umfasst; und wobei der Umkehrknopf (42) teilweise in einer Richtung, die der Motorbaugruppe (60) zugewandt ist, aus der Nut (2231) vorsteht.

8. Elektrischer Erdbohrer (100) nach Anspruch 1, wobei die Halterung (20) einen Montageabschnitt (21) zum Montieren der Motorbaugruppe (60), einen Betätigungsabschnitt (22), der sich am Umfang des Montageabschnitts (21) befindet, und einen Verbindungsabschnitt, der den Montageabschnitt (21) und den Betätigungsabschnitt (22) verbindet, einschließt.

9. Elektrischer Erdbohrer (100) nach Anspruch 8, wobei mindestens eine Beleuchtungslampe (221) auf einer der Bohrstange (50) zugewandten Seite des Betätigungsabschnitts (22) positioniert ist.

10. Elektrischer Erdbohrer (100) nach Anspruch 9, wobei der Betätigungsabschnitt (22) rechteckig ist und wobei sich die mindestens eine Beleuchtungslampe (221) an einer Ecke des Betätigungsabschnitts (22) befindet.

11. Elektrischer Erdbohrer (100) nach Anspruch 1, der weiter eine Beleuchtungslampe (221) umfasst, wobei die Beleuchtungslampe (221) eingeschaltet wird, wenn der erste Mikroschalter (31) ausgelöst wird.

12. Elektrischer Erdbohrer (100) nach Anspruch 1, der weiter einen Übertragungsmechanismus (10) umfasst, wobei der Übertragungsmechanismus (10) mit der Bohrstange (50) und der Motorbaugruppe (60) in Eingriff steht, wobei der Übertragungsmechanismus (10) eine Getriebebaugruppe und einen Getriebekasten (15) zum Aufnehmen der Getriebebaugruppe umfasst; wobei der Getriebekasten (15) einen ersten Drehstopper einschließt, und wobei die Halterung (20) einen zweiten Drehstopper umfasst, der mit dem ersten Drehstopper zusammenwirkt, um die vom Getriebekasten (15) aufgenommene Kraft auf die Halterung (20) zu übertragen.

13. Elektrischer Erdbohrer (100) nach Anspruch 12, wobei der Getriebekasten (15) einen Kastenkörper (151) und einen Kastendeckel (152) umfasst, der zum Kastenkörper (151) passt, und wobei der Kastenkörper (151) und der Kastendeckel (152) sich jeweils auf gegenüberliegenden Seiten der Halterung (20) befinden.

14. Elektrischer Erdbohrer (100) nach Anspruch 13, wobei der erste Drehstopper ein erstes Positionierungselement (1511) umfasst, das an einem Ende des Kastenkörpers (151) nahe der Halterung (20) angeordnet ist; und der zweite Drehstopper ein zweites Positionierungselement (211) umfasst, das auf einer dem Kastenkörper (151) zugewandten Seite der Halterung (20) eingerichtet ist; und wobei das zweite Positionierungselement (211) mit dem ersten Positionierungselement (1511) in Eingriff steht.

15. Elektrischer Erdbohrer (100) nach Anspruch 13, wobei der erste Drehstopper ein erstes Befestigungselement (1521) umfasst, das auf einer der Halterung (20) zugewandten Seite des Kastendeckels (152) angeordnet ist; und der zweite Drehstopper ein zweites Befestigungselement (212) umfasst, das auf einer dem Kastendeckel (152) zugewandten Seite der Halterung (20) eingerichtet ist; und wobei das zweite Befestigungselement (212) mit dem ersten Befestigungselement (1521) in Eingriff steht.

## Revendications

1. Tarière électrique (100) comprenant un support (20) présentant une poignée (222, 223), une tige de forage (50), un ensemble moteur (60) monté sur le support (20) pour entraîner la tige de forage (50) en rotation, et un ensemble commutateur (30) monté sur la poignée (222), dans laquelle l'ensemble commutateur (30) comprend :
un premier micro-commutateur (31) configuré pour activer ou désactiver l'ensemble moteur (60) ;
un commutateur (32) monté de manière pivotante sur la poignée (222) par l'intermédiaire d'un pivot (321), et coopérant avec le premier micro-commutateur (31) ; et
un bouton à verrouillage automatique (34) en prise avec le commutateur et configuré comme suit : lorsqu'il est dans un premier état, le bouton à verrouillage automatique (34) vient en butée contre le commutateur (32) pour empêcher le commutateur (32) de tourner autour du pivot (321) ; lorsqu'il est dans un second état, le bouton à verrouillage automatique (34) est désolidarisé du commutateur (32), et le commutateur (32) peut tourner autour du pivot (321), dans laquelle une direction de déplacement du bouton à verrouillage automatique (34) du premier état au second état est parallèle ou perpendiculaire à une direction axiale du pivot (321), **caractérisée en ce qu'**un trou traversant (2221) est agencé sur un côté de la poignée (222) faisant face à l'ensemble moteur (60), et dans laquelle le bouton à verrouillage automatique (34) fait saillie partiellement à partir du trou traversant (2221).

2. Tarière électrique (100) selon la revendication 1, dans laquelle un bras de butée (342) est agencé sur un côté du bouton à verrouillage automatique (34) faisant face au commutateur (32), et une rainure de réception (323) est agencée sur un côté du commutateur (32) faisant face au bouton à verrouillage automatique (34) ; dans laquelle lorsque le bouton à verrouillage automatique (34) est dans le premier état, le bras de butée (342) et la rainure de réception (323) sont décalés, et le bras de butée (342) vient en butée contre le commutateur (32) ; et dans laquelle lorsque le bouton à verrouillage automatique (34) est dans le second état, le bras de butée (342) et la rainure de réception (323) sont alignés.

3. Tarière électrique (100) selon la revendication 1, dans laquelle l'ensemble commutateur (30) comprend un élément élastique de réarmement de commutateur (33) pour réarmer le commutateur (32), et dans laquelle une extrémité de l'élément élastique de réarmement de commutateur (33) vient en butée contre la poignée (222) et l'autre extrémité de celui-ci vient en butée contre le commutateur (32).

4. Tarière électrique (100) selon la revendication 1, dans laquelle l'ensemble commutateur (30) comprend un élément élastique de réarmement de bouton à verrouillage automatique (35) pour réarmer le bouton à verrouillage automatique (34), et dans laquelle une extrémité de l'élément élastique de réarmement de bouton à verrouillage automatique (35) vient en butée contre le bouton à verrouillage automatique (34), et l'autre extrémité de celui-ci vient en butée contre la poignée (222).

5. Tarière électrique (100) selon la revendication 1, comprenant en outre un ensemble d'inversion (40), dans laquelle l'ensemble d'inversion (40) comprend un second micro-commutateur (41) et un bouton d'inversion (42) coopérant l'un avec l'autre ; et dans laquelle le second micro-commutateur (41) est configuré comme suit : l'ensemble moteur (60) s'inverse uniquement lorsque le premier micro-commutateur (31) et le second micro-commutateur (41) sont tous deux déclenchés simultanément.

6. Tarière électrique (100) selon la revendication 5, dans laquelle la poignée (222, 223) comprend une première poignée (222) et une seconde poignée (223) disposées l'une à l'opposé l'une de l'autre ; et dans laquelle l'ensemble commutateur (30) est agencé sur la première poignée (222) et l'ensemble d'inversion (40) est agencé sur la seconde poignée (223).

7. Tarière électrique (100) selon la revendication 6, dans laquelle la seconde poignée (223) comprend une rainure (2231) pour recevoir le bouton d'inversion (42) ; et dans laquelle le bouton d'inversion (42) fait saillie partiellement à partir de la rainure (2231) dans une direction orientée vers l'ensemble moteur (60).

8. Tarière électrique (100) selon la revendication 1, dans laquelle le support (20) inclut une partie de montage (21) pour monter l'ensemble moteur (60), une partie d'actionnement (22) située en périphérie de la partie de montage (21), et une partie de connexion connectant la partie de montage (21) et la partie d'actionnement (22).

9. Tarière électrique (100) selon la revendication 8, dans laquelle au moins une lampe d'éclairage (221) est positionnée sur un côté de la partie d'actionnement (22) faisant face à la tige de forage (50).

10. Tarière électrique (100) selon la revendication 9, dans laquelle la partie d'actionnement (22) est rectangulaire, et dans laquelle la au moins une lampe d'éclairage (221) est située au niveau d'un coin de la partie d'actionnement (22).

11. Tarière électrique (100) selon la revendication 1, comprenant en outre une lampe d'éclairage (221), dans laquelle la lampe d'éclairage (221) est allumée lorsque le premier micro-commutateur (31) est déclenché.

12. Tarière électrique (100) selon la revendication 1, comprenant en outre un mécanisme de transmission (10), dans laquelle le mécanisme de transmission (10) vient en prise avec la tige de forage (50) et l'ensemble moteur (60), dans laquelle le mécanisme de transmission (10) comprend un ensemble engrenage et une boîte de vitesses (15) pour recevoir l'ensemble engrenage ; dans laquelle la boîte de vitesses (15) inclut une première butée de rotation, et dans laquelle le support (20) inclut une seconde butée de rotation qui coopère avec la première butée de rotation pour transmettre la force reçue par la boîte de vitesses (15) au support (20).

13. Tarière électrique (100) selon la revendication 12, dans laquelle la boîte de vitesses (15) comprend un corps de boîte (151) et un couvercle de boîte (152) apparié au corps de boîte (151), et dans laquelle le corps de boîte (151) et le couvercle de boîte (152) sont respectivement situés sur des côtés opposés du support (20).

14. Tarière électrique (100) selon la revendication 13, dans laquelle la première butée de rotation comprend un premier élément de positionnement (1511) disposé sur une extrémité du corps de boîte (151) à proximité du support (20) ; et la seconde butée de rotation comprend un second élément de positionnement (211) agencé sur un côté du support (20) faisant face au corps de boîte (151) ; et dans laquelle le second élément de positionnement (211) vient en prise avec le premier élément de positionnement (1511).

15. Tarière électrique (100) selon la revendication 13, dans laquelle la première butée de rotation comprend un premier élément de fixation (1521) disposé sur un côté du couvercle de boîte (152) faisant face au support (20) ; et la seconde butée de rotation comprend un second élément de fixation (212) agencé sur un côté du support (20) faisant face au couvercle de boîte (152) ; et dans laquelle le second élément de fixation (212) vient en prise avec le premier élément de fixation (1521).
